# FASCICULE DE BREVET EUROPEEN

(11) **EP 1 575 391 B1**
(45) Date de publication et mention de la délivrance du brevet: **01.04.2009**
(21) Numéro de dépôt: 03773413.4
(22) Date de dépôt: 02.12.2003
(51) Int. Cl.: A44C 5/12

(54) **MONTRE A BRACELET ELASTIQUE EN UN SEUL BRIN**
ARMBANDUHR MIT EINEM EINZELNEN ELASTISCHEN ARMBAND
WRISTWATCH COMPRISING ONE-PIECE ELASTIC STRAP

(30) Priorité: 09.12.2002 EP 02406073
(43) Date de publication de la demande: 21.09.2005
(73) Titulaire: Yeager, Rebecca, 2520 La Neuveville (CH)
(72) Inventeur: Yeager, Rebecca, 2520 La Neuveville (CH)
(74) Mandataire: GLN
(86) Numéro de dépôt international: PCT/CH2003/000794
(87) Numéro de publication internationale: WO 2004/052137

(56) Documents cités:
- DE-U- 29 506 686
- FR-A- 2 792 507
- GB-A- 2 373 990

## Description

La présente invention se rapporte aux montres dont le bracelet comporte un seul brin élastique. Elle concerne, plus particulièrement, une montre dont le bracelet est une lame formant ressort qui a une forme incurvée de manière à s'enrouler autour du poignet.

Une pièce de ce type est décrite dans le document FR 2 792 507. Son bracelet est une lame d'acier à ressort possédant deux états stables dans lesquels elle est respectivement allongée et enroulée en spirale. Ce bracelet est enfermé dans une gaine d'habillage souple thermosoudée autour de la lame et porte des éléments décoratifs ou fonctionnels tels qu'un boîtier de montre.

La présente invention a pour but de fournir une version améliorée d'une montre utilisant le même type de bracelet à ressort.

De façon plus précise, l'invention concerne une montre bracelet dotée de constituants fonctionnels et d'un bracelet à ressort en un seul brin formé d'une lame métallique élastique possédant deux états stables dans lesquels elle est respectivement allongée et enroulée en spirale, et qui résultent d'un double laminage, l'un dans le sens de la longueur, l'autre dans le sens de la largeur. Cette montre est caractérisée en ce que ses constituants fonctionnels sont fixés sur un circuit imprimé souple lié à la lame et doté de pistes conductrices les reliant les uns aux autres et sont disposés sur l'une des extrémités de la lame et fixés sur un circuit imprimé souple lié à la lame (voir revendication 1).

Selon un mode de réalisation préféré, la montre selon l'invention est une montre électronique qui présente encore les principales caractéristiques suivantes :
- le circuit imprimé est lié à la lame par un plot de colle disposé en son milieu et sur l'axe longitudinal de la lame;
- les constituants rigides, oscillateur à quartz, circuit intégré et source d'alimentation sont disposés sur les bords de la lame;
- le circuit imprimé est découpé, tout autour des constituants rigides, exception faite des pistes conductrices qui les relient aux autres constituants;
- l'organe de commande de la montre est disposé en regard du plot de colle, dans l'axe longitudinal de la lame;
- la source d'alimentation est un accumulateur couplé à un générateur thermoélectrique fixé sur la lame au moyen d'une colle thermoconductrice;
- la montre possède un affichage LCD constitué de deux bandes souples respectivement destinées à afficher l'heure et la minute, et comportant respectivement douze cases alignées en colonne portant la série des nombres 1, 2, 3, 4, 5, 6, 7, 8, 9, 10, 11 et 12 et douze cases alignées en colonne portant la série des nombres 00, 05, 10, 15, 20, 25, 30, 35, 40, 45, 50 et 55.
- la montre est glissée dans un fourreau en plastique souple.

D'autres caractéristiques de l'invention apparaîtront plus explicitement à la lecture de la description qui va suivre, faite en regard du dessin annexé dans lequel :
- la figure 1 représente la montre bracelet, vue de dessus, en position déployée,
- la figure 2 est une vue en perspective de la montre en position enroulée,
- les figures 3 et 4 représentent la lame élastique respectivement dans ses deux états stables,
- la figure 5 est une vue de dessus écorchée de la montre, et
- les figures 6, 7 et 8 sont des coupes de la figure 5 respectivement selon VI-VI, VII-VII et VIII-VIII.

Sur les figures, on a représenté une montre électronique 10 à bracelet élastique en un seul brin, comportant :
- une lame élastique 12, possédant deux états stables, dans lesquels elle est respectivement allongée et enroulée;
- un circuit imprimé souple 14 fixé sur la lame 12 et supportant un affichage LCD souple 16 destiné à indiquer le temps courant, un oscillateur à quartz 18, un circuit intégré 20, un accumulateur 22, un générateur thermoélectrique 24 et deux touches de mise à l'heure 26, ces différents composants étant, de manière connue, reliés entre eux par des pistes conductrices (non représentées) déposées sur le circuit imprimé 14.

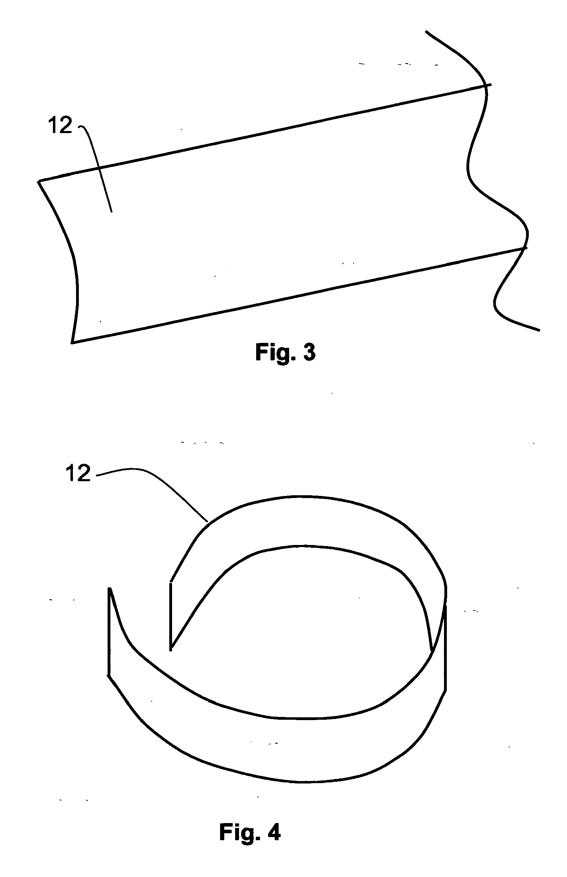

La lame élastique 12 est en acier inoxydable. Elle a, typiquement, une épaisseur comprise entre 0.10 et 0.20mm, une largeur comprise entre 2 et 4cm et une longueur comprise entre 20 et 30cm. De façon avantageuse, son épaisseur est de 0.15mm, sa largeur de 3cm et sa longueur de 25cm, ce qui correspond environ à un tour et demi d'un avant-bras. Les deux états stables de la lame 12 sont respectivement représentés sur les figures 3 et 4. Dans le premier état (figure 3), elle est à plat et présente alors une légère courbure transversale. Dans le deuxième état (figure 4), elle est enroulée dans sa longueur, la courbure transversale ayant disparu.

De telles caractéristiques sont obtenues par un double laminage de la lame 12, d'abord dans le sens de la longueur, puis dans le sens de la largeur. Le premier laminage a pour effet d'étirer l'une des faces plus que l'autre, ce qui confère à la lame une élasticité à l'enroulement dans sa longueur. Le deuxième laminage de la lame lui donne la courbure transversale, de manière à ce que la concavité soit dirigée vers l'extérieur lorsqu'elle s'enroule.

Ainsi, lorsque la lame 12 est à plat, la courbure transversale empêche l'élasticité à l'enroulement de s'exprimer, ce qui fournit la première position stable (figure 3). A la moindre impulsion d'enroulement donnée, l'équilibre établi est rompu et la lame s'enroule automatiquement jusqu'à la deuxième position stable (figure 4).

Pour une meilleure compréhension, on définira dans la suite de la description comme intérieur tout ce qui est orienté du côté de l'intérieur de l'anneau formé par la lame 12 lorsqu'elle est enroulée et, comme extérieur ce qui est orienté dans la direction de l'autre face de la lame.

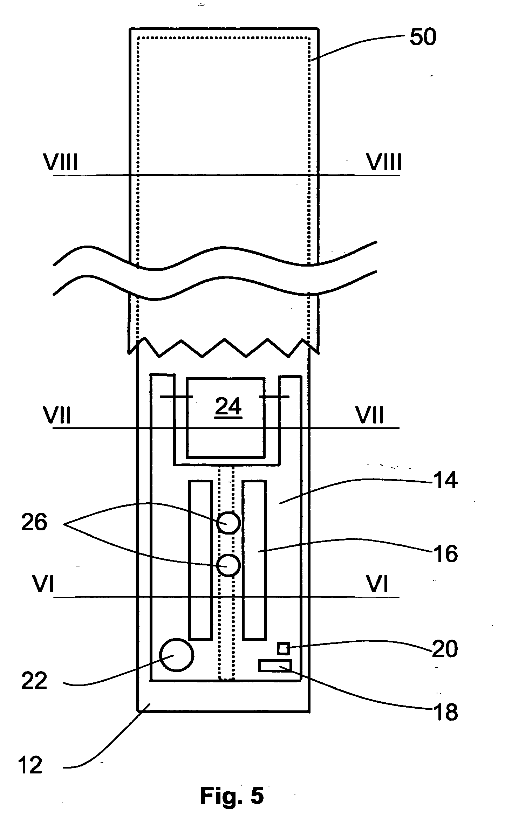

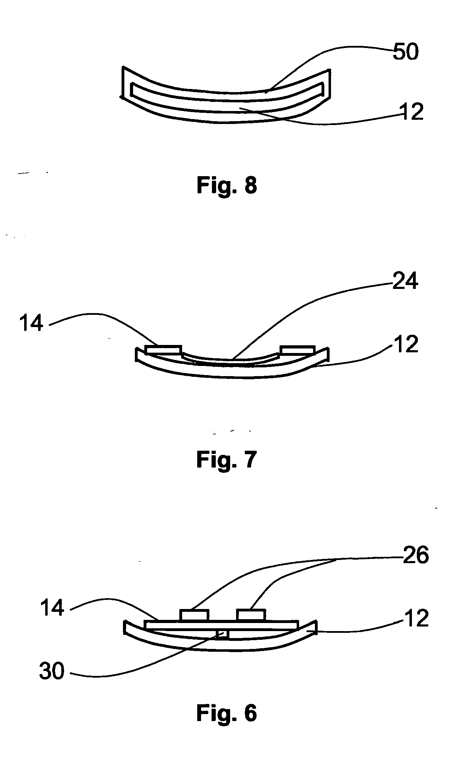

Comme le montre la figure 5, le circuit imprimé souple 14 a la forme d'un rectangle, légèrement moins large que la lame 12. Il est collé sur une extrémité 28 de la face extérieure de la lame 12, au moyen d'un plot de colle élastique 30, aussi visible sur la figure 6, déposé en son milieu et sur l'axe longitudinal de la lame. Ainsi, le plot 30 conserve toute sa souplesse et se prête aux déformations de la lame 12, sans contrarier l'élasticité de celle-ci.

Du côté opposé à l'extrémité 28 de la lame, le circuit 14 a la forme d'une fourche à deux doigts 32, dégageant un espace libre.

Le générateur thermoélectrique 24 se présente sous la forme d'une plaquette souple, dotée d'une face extérieure 36 et d'une face intérieure. Il est avantageusement du type faisant l'objet de la demande EP-02405040.3 et ne sera donc pas décrit plus en détail. On se contentera de rappeler qu'il a pour fonction de convertir en énergie électrique une différence de température perçue entre ses deux faces. A titre d'exemple, un générateur de 4 cm² permet d'obtenir une puissance de 10 µW à ses bornes.

Le générateur thermoélectrique 24 prend place dans l'espace défini entre les doigts 32 du circuit imprimé 14. Sa face intérieure est directement collée sur la lame 12 au moyen d'une couche de colle élastique thermoconductrice visible sur la figure 7. Les bornes sont reliées aux pistes conductrices du circuit imprimé par des fils.

L'affichage LCD souple 16 est collé sur la face extérieure du circuit imprimé 14. Il est constitué de deux bandes et, respectivement destinées à afficher l'heure et la minute. La bande comporte douze cases alignées en colonne, qui affichent la série des nombres 1, 2, 3, 4, 5, 6, 7, 8, 9, 10, 11 et 12. La bande 48 comporte également douze cases alignées en colonne, qui affichent la série des nombres 00, 05, 10, 15, 20, 25, 30, 35, 40, 45, 50 et 55.

L'oscillateur à quartz 18, le circuit intégré 20, l'accumulateur 22 et les touches 26 sont des éléments rigides qui ne peuvent donc pas s'adapter aux déformations de la lame 12.

Afin de perturber le moins possible l'élasticité du système, l'oscillateur 18, le circuit intégré 20 et l'accumulateur 22 sont désolidarisés de la lame 12 en les positionnant au bord du circuit imprimé 14, c'est à dire le plus loin possible du plot de colle 30 qui constitue le lien souple entre le circuit 14 et la lame 12. Par ailleurs, l'oscillateur 18, qui est un composant allongé, est orienté dans le sens de la largeur de la lame. Enfin, le circuit imprimé 14 est découpé, tout autour des ces éléments, exception faite des pistes conductrices qui les relient aux autres composants.

Quant aux deux touches de commande 26, elles sont disposées sur l'axe de la lame 12, le long du plot de colle 30. Il est ainsi possible d'exercer sur elles la pression nécessaire pour les actionner.

Selon l'invention, afin de rendre la montre 10 étanche et de la protéger des agressions extérieures, l'ensemble qui vient d'être décrit est glissé dans un fourreau en plastique souple 50, particulièrement visible aux figures 5 et 8, qui, par sa couleur et/ou les motifs de sa décoration, assure l'esthétique de la montre, notamment en cachant le circuit imprimé 14.

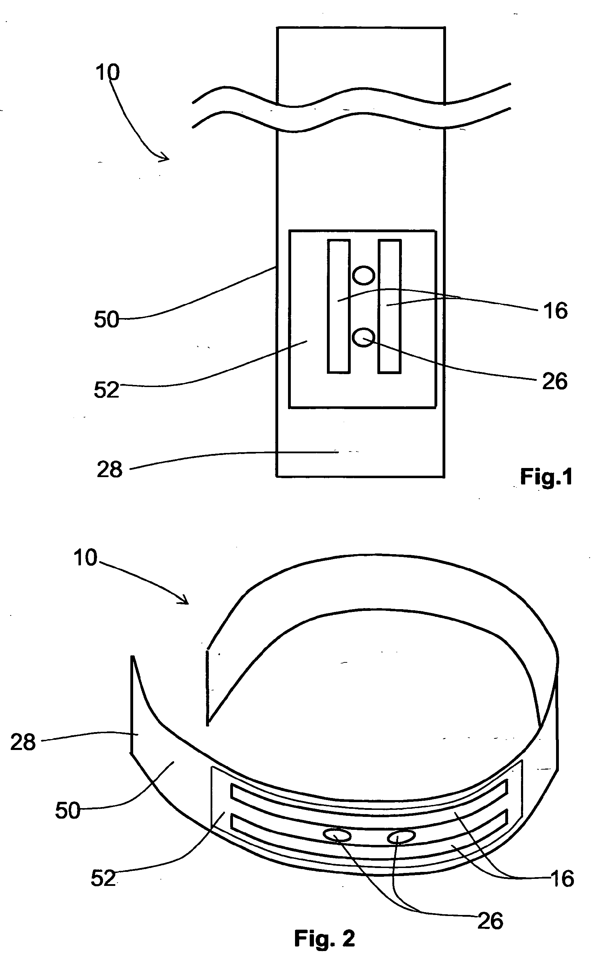

Bien entendu, comme le montrent les figures 1 et 2, le fourreau 50 possède une fenêtre transparente 52 en regard de l'affichage LCD 16 et des touches de mise à l'heure 26.

En outre, le fourreau 50 remplit une fonction de sécurité en recouvrant les arêtes de la lame 12 qui peuvent être tranchantes en raison de leur finesse.

Il peut être avantageux que le fourreau 50 ne recouvre pas la face intérieure de la lame 12 en regard du générateur thermoélectrique 24, afin de ne pas perturber l'établissement du gradient thermique entre ses deux faces.

Pour exposer l'utilisation et le fonctionnement de la montre selon l'invention, on se référera maintenant, plus spécialement, aux figures 1 et 2.

Sur la figure 1, la montre 10 est posée à plat, sa lame élastique étant en position de repos ou déployée. Lorsqu'un utilisateur veut la passer à son poignet, il lui suffit de la saisir par l'extrémité 28, la face extérieure dirigée vers le haut, et de la fouetter sur son poignet pour qu'elle s'enroule automatiquement autour de celui-ci. L'élasticité de la lame 12 est alors suffisante pour que la montre 10 soit solidement maintenue en place.

Lorsque la montre 10 est ainsi positionnée, la face intérieure de la lame élastique 12 et, plus particulièrement, sa zone en regard du générateur thermoélectrique 24, est au contact de la peau, tandis que la face extérieure de la montre est à l'air libre, ce qui assure une différence moyenne de température de plusieurs degrés entre les faces du générateur 24. Celui-ci est alors en mesure de fournir une puissance électrique suffisante pour charger l'accumulateur 22 servant à alimenter les différents organes de la montre 10.

Lorsque le porteur veut enlever sa montre, il n'a qu'à la saisir par son extrémité 28 et à la tirer de manière à ce qu'elle se déroule, jusqu'à atteindre à nouveau sa première position stable. La montre 10 est alors allongée et peut être rangée simplement.

Ainsi est réalisée une montre à bracelet élastique en un seul brin s'adaptant parfaitement à l'avant-bras de son porteur. De plus, l'existence de deux positions stables procure une grande facilité pour la pose et la dépose de la montre.

Le mode de réalisation qui vient d'être décrit n'est qu'un exemple particulier qui ne limite pas la portée de l'invention. D'autres moyens d'affichage ou d'alimentation électrique peuvent, par exemple, être adaptés sur une lame élastique du type de la lame 12.

## Revendications

1. Montre bracelet électronique dotée de constituants fonctionnels et d'un bracelet à ressort en un seul brin formé d'une lame métallique élastique (12) possédant deux états stables dans lesquels elle est respectivement allongée et enroulée dans sa longueur et qui résultent d'un double laminage, l'un dans le sens de la longueur, l'autre dans le sens de la largeur, **caractérisée en ce que** ses constituants fonctionnels sont disposés sur l'une des extrémités de la lame (12) et sont fixés sur un circuit imprimé souple (14) lié à la lame et doté de pistes conductrices les reliant les uns aux autres.

2. Montre bracelet selon la revendication 1, **caractérisée en ce que** ladite lame (12) a une épaisseur comprise entre 0.10 et 0.20 mm, une largeur comprise entre 2 et 4 cm et une longueur comprise entre 20 et 30 cm.

3. Montre bracelet électronique selon l'une des revendications 1 et 2, **caractérisée en ce que** ledit circuit imprimé (14) est lié à la lame (12) par un plot de colle (30) disposé en son milieu et sur l'axe longitudinal de la lame.

4. Montre bracelet électronique selon la revendication 3, **caractérisée en ce que** ses constituants rigides, oscillateur à quartz (18), circuit intégré (20) et source d'alimentation (22) sont disposés sur les bords de la lame (12).

5. Montre bracelet électronique selon la revendication 4, **caractérisée en ce que** ledit circuit imprimé (14) est découpé, tout autour desdits constituants rigides, exception faite des pistes conductrices qui les relient aux autres constituants.

6. Montre bracelet électronique selon l'une-des revendications 3 à 5, dont l'un des constituants est un organe de commande (26), **caractérisée en ce que** ledit organe est disposé en regard du plot de colle (30), dans l'axe longitudinal de la lame.

7. Montre bracelet électronique selon l'une des revendications 1 à 6, **caractérisée en ce que** sa source d'alimentation est un accumulateur (22) et **en ce qu'**elle comporte, en outre, un générateur thermoélectrique (24) relié au circuit imprimé (14) pour charger l'accumulateur et fixé sur la lame (12) elle-même.

8. Montre bracelet électronique selon la revendication 7, **caractérisée en ce que** le générateur thermoélectrique (24) est collé sur la lame (12) au moyen d'une couche de colle élastique thermoconductrice.

9. Montre bracelet électronique selon l'une des revendications 1 à 8, dont l'un des constituants est un affichage LCD, **caractérisée en ce que** ledit affichage (16) est constitué de deux bandes souples respectivement destinées à afficher l'heure et la minute, et comportant respectivement douze cases alignées en colonne portant la série des nombres 1, 2, 3, 4, 5, 6, 7, 8, 9, 10, 11 et 12 et douze cases alignées en colonne portant la série des nombres 00, 05, 10, 15, 20, 25, 30, 35, 40, 45, 50 et 55.

10. Montre bracelet selon l'une des revendications 1 à 9, **caractérisée en ce qu'**elle est glissée dans un fourreau en plastique souple (50).

11. Montre bracelet selon la revendication 10, **caractérisée en ce que** le fourreau (50) possède une fenêtre transparente (52) en regard de l'affichage LCD (16).

## Claims

1. An electronic wristwatch having functional components and a one-piece spring strap made from an elastic metal strip (12) possessing two stable states, in one of which it is straight and in the other of which it is coiled along its length, and which are produced by being put through two rollings, one along its length and the other across its width, which wristwatch is **characterized in that** its functional components are located on one of the ends of the strip (12) and are fixed to a flexible printed circuit (14) attached to the strip and having conducting tracks connecting them to each other.

2. The wristwatch as claimed in claim 1, **characterized in that** said strip (12) has a thickness of between 0.10 and 0.20 mm, a width of between 2 and 4 cm and a length of between 20 and 30 cm.

3. The electronic wristwatch as claimed in either of claims 1 and 2, **characterized in that** said printed circuit (14) is attached to the strip (12) by a spot of adhesive (30) positioned at its center on the longitudinal axis of the strip.

4. The electronic wristwatch as claimed in claim 3, **characterized in that** its rigid components, namely the quartz oscillator (18), the integrated circuit (20) and the power source (22), are positioned on the edges of the strip (12).

5. The electronic wristwatch as claimed in claim 4, **characterized in that** said printed circuit (14) is cut to fit around said rigid components, except where the conducting tracks connect these to the other components.

6. The electronic wristwatch as claimed in one of claims 3-45 one of the components of which is a control means (26), which wristwatch is **characterized in that** said means is positioned over the spot of adhesive (30), in the longitudinal axis of the strip.

7. The electronic wristwatch as claimed in one of claims 1 to 6, **characterized in that** its power source is a rechargeable battery (22) and **in that** it also comprises a thermoelectric generator (24) which is connected to the printed circuit (14) to charge the battery and which is fixed to the strip (12) itself.

8. The electronic wristwatch as claimed in claim 7 **characterized in that** the thermoelectric generator (24) is bonded to the strip (12) by means of a layer of elastic heat-conducting adhesive.

9. The electronic wristwatch as claimed in one of claims 1 to 8, one of the components of which is a liquid-crystal display, which wristwatch is **characterized in that** said display (16) consists of two flexible bands, one for displaying the hour and the other the minutes, and respectively comprising twelve boxes aligned in a column bearing the series of numbers 1, 2, 3, 4, 5, 6, 7, 8, 9, 10, 11 and 12 and twelve boxes aligned in a column bearing the series of numbers 00, 05, 10, 15, 20, 25, 30, 35, 40, 45, 50 and 55.

10. The wristwatch as claimed in one of claims 1 to 9, **characterized in that** it is enclosed in a flexible plastic sheath (50).

11. The wristwatch as claimed in claim 10, **characterized in that** the sheath (50) has a transparent window (52) over the liquid-crystal display (16).

## Patentansprüche

1. Elektronische Armbanduhr, ausgestattet mit funktionellen Komponenten und einem Federarmband aus einem einzigen Strang, gebildet aus einem elastischen Metallplättchen (12), das zwei stabile Zustände besitzt, in denen es jeweils gestreckt und in seiner Länge aufgerollt ist, die Ergebnis einer doppelten Walzung sind, einer in Richtung der Länge, der anderen in Richtung der Breite, **dadurch gekennzeichnet, dass** ihre funktionellen Komponenten auf einem der Enden des Plättchens (12) angeordnet sind und auf einer elastischen gedruckten Schaltung (14) fixiert sind, die mit dem Plättchen verbunden ist und mit Leitungsbahnen ausgestattet, die sie miteinander verbinden.

2. Armbanduhr nach Anspruch 1, **dadurch gekennzeichnet, dass** das Plättchen (12) eine Dicke zwischen 0,10 und 0,20 mm inklusive hat, eine Breite zwischen 2 und 4 cm inklusive und eine Länge zwischen 20 und 30 cm inklusive.

3. Elektronische Armbanduhr nach einem der Ansprüche 1 und 2, **dadurch gekennzeichnet, dass** die gedruckte Schaltung (14) mit dem Plättchen (12) durch ein Kleberklötzchen (30) verbunden ist, das in seiner Mitte und auf der Längsachse des Plättchens angeordnet ist.

4. Elektronische Armbanduhr nach Anspruch 3, **dadurch gekennzeichnet, dass** ihre feststehenden Komponenten Quarzoszillator (18), integrierter Schaltkreis (20) und Versorgungsquelle (22) auf den Rändern des Plättchens (12) angeordnet sind.

5. Elektronische Armbanduhr nach Anspruch 4, **dadurch gekennzeichnet, dass** die gedruckte Schaltung (14) um die feststehenden Komponenten ausgeschnitten ist, mit Ausnahme der Leitungsbahnen, die sie mit den anderen Komponenten verbinden.

6. Elektronische Armbanduhr nach einem der Ansprüche 3 bis 5, von der eine der Komponenten ein Steuerorgan (26) ist, **dadurch gekennzeichnet, dass** das Organ gegenüber dem Kleberklötzchen (30) in der Längsachse des Plättchens angeordnet ist.

7. Elektronische Armbanduhr nach einem der Ansprüche 1 bis 6, **dadurch gekennzeichnet, dass** ihre Versorgungsquelle ein Akkumulator (22) ist und **dadurch**, dass sie weiterhin einen mit der gedruckten Schaltung (14) verbundenen und direkt auf dem Plättchen (12) fixierten thermoelektrischen Generator (24) umfasst, um den Akkumulator zu laden.

8. Elektronische Armbanduhr nach Anspruch 7, **dadurch gekennzeichnet, dass** der thermoelektrische Generator (24) mit Hilfe einer elastischen thermoleitenden Kleberschicht auf dem Plättchen (12) aufgeklebt ist.

9. Elektronische Armbanduhr nach einem der Ansprüche 1 bis 8, von der eine der Komponenten eine LCD-Anzeige ist, **dadurch gekennzeichnet, dass** die Anzeige (16) von zwei elastischen Streifen gebildet wird, die jeweils dazu bestimmt sind, die Stunde und die Minute anzuzeigen und jeweils 12 in einer Spalte aufgereihte Kästchen umfasst, die die Zahlenreihe 1, 2, 3, 4, 5, 6, 7, 8, 9, 10, 11 und 12 tragen, und zwölf in einer Spalte aufgereihte Kästchen, die die Zahlenreihe 00, 05, 10, 15, 20, 25, 30, 35, 40, 45, 50 und 55 tragen.

10. Armbanduhr nach einem der Ansprüche 1 bis 9, **dadurch gekennzeichnet, dass** sie in einem flexiblen Kunststoff-Futteral (50) steckt.

11. Armbanduhr nach Anspruch 10, **dadurch gekennzeichnet, dass** das Futteral (50) ein durchsichtiges Fenster (52) gegenüber der LCD-Anzeige (16) besitzt.
